# FASCICULE DE BREVET EUROPEEN

(11) **EP 3 077 187 B1**
(45) Date de publication et mention de la délivrance du brevet: **10.01.2018**
(21) Numéro de dépôt: 14803147.9
(22) Date de dépôt: 28.11.2014
(51) Int. Cl.: B29D 30/06

(54) **MOULE À SECTEURS POUR PNEUMATIQUE ET PROCÉDÉ DE MOULAGE ASSOCIÉ**
SEGMENTIERTES REIFENFORMWERKZEUG UND VERFAHREN ZUM REIFENFORMEN
SEGMENTED MOLD FOR PNEUMATIC TIRES AND ASSOCIATED METHOD FOR TIRE MOLDING

(30) Priorité: 04.12.2013 FR 1362060
(43) Date de publication de la demande: 12.10.2016
(73) Titulaire: Compagnie Générale des Etablissements Michelin, 63000 Clermont-Ferrand (FR)
(72) Inventeur: MASSOPTIER-DAVID, Mickaël, F-63040 Clermont-Ferrand Cedex 09 (FR); SIMONELLI, Thomas, F-63040 Clermont-Ferrand Cedex 09 (FR); WALRAND, Gilles, F-63040 Clermont-Ferrand Cedex 09 (FR)
(74) Mandataire: Noel, Luminita
(86) Numéro de dépôt international: PCT/EP2014/075888
(87) Numéro de publication internationale: WO 2015/082323

(56) Documents cités:
- EP-A1- 2 000 290
- EP-A2- 0 701 894
- GB-A- 758 816
- US-A- 3 797 979
- US-A- 4 568 259
- US-A1- 2008 277 815
- US-A1- 2012 111 464
- US-B1- 8 597 008

## Description

La présente invention concerne le domaine des moules de cuisson ou vulcanisation pour pneumatiques de véhicules, et plus particulièrement les moules du type à secteurs.

Ce type de moule comprend principalement deux coquilles assurant chacune le moulage d'un des flancs latéraux du pneumatique, une pluralité de secteurs assurant le moulage de la bande de roulement dudit pneumatique et mobiles radialement entre une position d'ouverture et une position de fermeture du moule, et au moins une couronne de serrage pour permettre le déplacement radial des secteurs.

Les coquilles et les secteurs définissent un espace intérieur destiné à être mis en contact avec l'ébauche du pneumatique non vulcanisée. Pour plus de détails sur un tel type de moule à secteurs, on pourra par exemple se référer aux documents DE 1 808 811, US 3 797 979, EP-A2-0 701 894 et EP-B1-2 040 911. Le document GB 758 816 divulgue aussi un moule à secteurs qui ne sont pas mobiles radialement. La fabrication du pneumatique, et plus particulièrement la phase de vulcanisation, nécessite d'appliquer une pression sur l'ébauche afin de la plaquer contres les faces internes du moule et d'apporter de la chaleur au moule. Il est par exemple connu de chauffer le moule par induction électrique et/ou par induction magnétique. Il est également connu de chauffer le moule au moyen d'un fluide caloporteur tel que de la vapeur d'eau sous pression.

Afin d'optimiser la cuisson du pneumatique, une solution consiste à chauffer et à maintenir les deux coquilles du moule à une température différente de celle à laquelle sont amenés les secteurs.

Or, dans la position de fermeture du moule, chaque coquille est généralement prévue pour venir directement en appui contre les secteurs dans la direction radiale. De tels contacts favorisent les transferts thermiques par conduction à l'intérieur du moule entre les secteurs et les coquilles. Ceci peut être incompatible avec une cuisson optimisée du pneumatique.

On connaît encore, par le brevet EP-B1-0 522 374, un moule à secteurs comprenant en outre deux joncs latéraux fixés sur les secteurs et venant radialement en appui contre les coquilles dans la position de fermeture. De tels joncs visent à éviter l'apparition de bavures de moulage sur les pneumatiques fabriqués et sont réalisés en acier, comme les secteurs et les coquilles, de sorte que seules des pièces en acier entrent en contact lors de la fermeture du moule.

Cette solution favorise également les transferts de chaleur par conduction entre les secteurs et les coquilles ainsi qu'une répartition homogène de la température dans le moule.

La présente invention vise à remédier à ces inconvénients.

Plus particulièrement, la présente invention vise à prévoir un moule à secteurs permettant de maintenir les coquilles et les secteurs à des niveaux de température différents de façon stable au cours de la phase de cuisson du pneumatique.

Dans un mode de réalisation, le moule est destiné à un pneumatique du type comprenant une bande de roulement et deux flancs latéraux. Comme défini dans la revendication 1, le moule comprend des première et deuxième coquilles destinées à assurer le moulage des flancs latéraux du pneumatique, et une pluralité de secteurs répartis dans le sens circonférentiel et destinés à assurer le moulage de la bande de roulement dudit pneumatique. Les secteurs sont mobiles radialement entre une position d'ouverture et une position de fermeture du moule. Le moule comprend en outre au moins un moyen d'espacement interposé entre chaque secteur et chaque coquille pour maintenir espacés dans le sens radial ledit secteur et les coquilles dans la position de fermeture du moule de sorte que les coquilles et les secteurs sont en contact dans le sens radial uniquement par l'intermédiaire des moyens d'espacement. Lesdits moyens d'espacement sont aptes à limiter le transfert thermique entre les coquilles et les secteurs dans la position de fermeture du moule.

Le montage d'au moins un tel moyen d'espacement qui est intercalé entre chaque secteur et chaque coquille permet de limiter les transferts de chaleur par conduction entre ces parties du moule lors de la cuisson du pneumatique. Il est ainsi possible de maintenir les coquilles et les secteurs à des températures différentes afin de conserver une répartition hétérogène de température à l'intérieur du moule. Ceci permet de pouvoir optimiser la cuisson du pneumatique. Les moyens d'espacement sont distincts des coquilles et des secteurs.

Dans un mode de réalisation, chaque moyen d'espacement est réalisé au moins en partie en matériau isolant thermiquement présentant une conductivité thermique inférieure à celles des matériaux des secteurs et des coquilles.

Avantageusement, chaque moyen d'espacement comprend une partie d'espacement réalisée sous la forme d'un tronçon de jonc et les moyens d'espacement sont disposés de sorte que les parties d'espacement forment au moins un jonc entre les secteurs et chaque coquille.

Dans un mode de réalisation, ladite partie d'espacement délimite intérieurement au moins une cavité. De préférence, ladite cavité est délimitée dans le sens radial par des parois intérieure et extérieure de la partie d'espacement montées en contact contre la coquille associée et contre le secteur associé.

La présence d'au moins une cavité dans la partie d'espacement permet de limiter les sections de passage d'un flux de chaleur sur le moyen d'espacement. Ainsi, on limite encore la propagation de la chaleur au travers du moyen d'espacement. L'air présent dans la ou les cavités augmente les propriétés isolantes du moyen d'espacement.

Alternativement ou en combinaison, le moule peut également comprendre des moyens d'alimentation en fluide de refroidissement de la cavité et des moyens de sortie dudit fluide pour obtenir une circulation du fluide de refroidissement le long de ladite cavité.

Une circulation de fluide de refroidissement dans la cavité de chaque moyen d'espacement peut également être prévue pour limiter le transfert de chaleur entre les secteurs et les coquilles à l'intérieur du moule lors de la cuisson du pneumatique.

Dans un mode de réalisation, chaque moyen d'espacement comprend au moins une partie de fixation s'étendant sensiblement radialement à partir de la partie d'espacement à l'intérieur d'un trou ménagé sur le secteur associé ou sur la coquille associée. Le moule peut comprendre un moyen de fixation monté dans ledit trou et s'étendant à l'intérieur de ladite partie de fixation.

De préférence, chaque moyen d'espacement est radialement en contact d'un côté contre la coquille associée et radialement en contact de l'autre côté contre le secteur associé. Chaque moyen d'espacement peut comprendre une face de contact avec le pneumatique dans la position de fermeture du moule.

De manière avantageuse, chaque moyen d'espacement est réalisé en un matériau non métallique, notamment en un matériau composite. Alternativement, chaque moyen d'espacement peut être réalisé en matériau métallique, notamment en titane.

Dans un mode de réalisation, chaque secteur comprend un support et une garniture de moulage fixée sur ledit support. Les moyens d'espacement peuvent être fixés sur les secteurs et assurer la retenue des garnitures de moulage sur les supports.

Le moule peut encore comprendre au moins une couronne de serrage coopérant avec des faces extérieures des secteurs. Comme défini dans la revendication 15, l'invention concerne également un procédé de moulage d'un pneumatique à l'aide d'un moule tel que défini précédemment, dans lequel on chauffe les deux coquilles à une température différente de celle à laquelle sont chauffés les secteurs dudit moule.

La présente invention sera mieux comprise à la lecture de la description détaillée de modes de réalisation pris à titre d'exemples nullement limitatifs et illustrés par les dessins annexés sur lesquels :
- la figure 1 est une demi-vue en coupe d'un moule à secteurs pour pneumatique selon un premier exemple de réalisation de l'invention dans une position de fermeture dudit moule,
- la figure 2 est une vue de détail de la figure 1,
- la figure 3 est une vue en coupe selon l'axe III-III de la figure 1,
- la figure 4 est une vue de détail de la figure 3, et
- la figure 5 est une vue de détail en coupe d'un moule à secteurs selon un deuxième exemple de réalisation de l'invention dans une position de fermeture dudit moule.

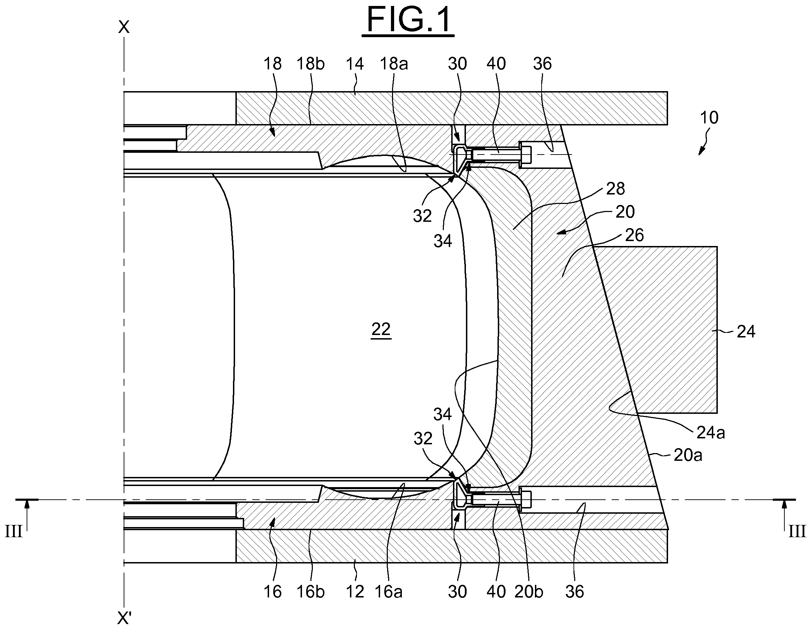

Sur la figure 1, on a représenté un exemple de réalisation d'un moule à secteurs, référencé 10 dans son ensemble, prévu pour la cuisson ou vulcanisation d'un pneumatique de forme annulaire et comprenant une bande de roulement cylindrique prolongée par des premier et second flancs latéraux opposés. Le pneumatique est pour véhicule automobile pouvant par exemple être un véhicule de tourisme, un véhicule utilitaire ou un véhicule de type poids lourd. Sur la figure 1, le moule 10 est illustré dans une position supposée verticale. Le moule 10 présente un axe X-X' de symétrie qui coïncide avec l'axe de révolution du pneumatique.

Le moule 10 comprend des plateaux 12, 14 inférieur et supérieur, deux coquilles 16, 18 annulaires inférieure et supérieure montées en appui contre les plateaux en étant axialement en regard, et une couronne de secteurs 20 disposés axialement entre les plateaux 12, 14 et entourant radialement les coquilles 16, 18. Les coquilles 16, 18 et les secteurs 20 sont centrés sur l'axe X-X'. Les secteurs 20 sont répartis circonférentiellement autour dudit axe. Dans l'exemple de réalisation illustré, les secteurs 20 sont identiques entre eux et au nombre de neuf. Les secteurs 20 sont mobiles radialement entre une position rapprochée par rapport aux coquilles 16, 18 telle qu'illustrée sur la figure 1 correspondant à une position de fermeture du moule 10, et une position éloignée d'ouverture dudit moule. Dans la position de fermeture, les coquilles 16, 18 et la pluralité de secteurs 20 délimitent conjointement une empreinte 22 du pneumatique. La position de fermeture du moule 10 correspond à la position de moulage du pneumatique.

Le moule 10 comprend également une couronne 24 de serrage solidaire du plateau 14 supérieur et comprenant une face intérieure 24a de forme tronconique venant en appui radialement contre une face extérieure 20a complémentaire de chaque secteur. De manière connue en soi, chaque secteur 20 est relié à la couronne 24 de serrage par l'intermédiaire d'une glissière (non visible) de sorte qu'un mouvement axial de ladite couronne provoque le déplacement radial des secteurs 20 entre la position de fermeture et la position d'ouverture du moule, ou inversement.

Chaque coquille 16, 18 comprend une face interne 16a, 18a annulaire pour le moulage des flancs latéraux du pneumatique. La face interne 16a est axialement en regard de la face interne 18a opposée. Les faces internes 16a, 18a sont symétriques entre elles par rapport à un plan médian radial du moule 10. Une face externe 16b, 18b radiale de chaque coquille est montée axialement en appui contre une face interne radiale du plateau 12, 14 associé. La face externe 16b, 18b de chaque coquille est axialement opposée à la face interne 16a, 18a. Chaque plateau 12, 14 forme un plateau de support de la coquille 16 ou 18 associée. Chaque plateau 12, 14 est situé axialement du côté opposé à l'empreinte 22 délimitée par les coquilles 16, 18 et les secteurs 20. Chaque secteur 20 comprend également une face intérieure 20b, radialement opposée à la face extérieure 20a tronconique, pour assurer le moulage de la bande de roulement du pneumatique. Dans la description, les termes « interne » et « externe » sont utilisés pour définir une orientation selon le sens ou la direction radiale tandis que les termes « intérieur » et « extérieur » sont utilisés pour définir une orientation selon le sens ou la direction axiale.

Le moule 10 comprend encore deux talons (non représentés) annulaires inférieur et supérieur montés en appui contre les coquilles 16, 18 pour le moulage des talons latéraux du pneumatique. Les talons peuvent être des pièces rapportées et fixées sur les coquilles 16, 18 ou être réalisés monoblocs avec lesdites coquilles.

Dans l'exemple de réalisation illustré, chaque secteur 20 comprend un support 26 délimitant la face extérieure 20a en contact contre la couronne 24 de serrage, et une garniture 28 de moulage fixée sur le support et délimitant la face intérieure 20b portant l'empreinte de la bande de roulement du pneumatique. La garniture 28 est située radialement du côté intérieur du support 26. Le support 26 peut être réalisé en matière métallique, notamment en acier, et la garniture 28 de moulage en aluminium. Les coquilles 16, 18 peuvent être réalisées en matière métallique, notamment en acier.

Le moule 10 comprend encore une pluralité de moyens d'espacement 30 interposés entre les secteurs 20 et les coquilles 16, 18 pour les maintenir espacés dans le sens radial dans la position de fermeture dudit moule. Chaque secteur 20 supporte deux moyens d'espacement 30. Chaque moyen d'espacement 30 est fixé sur une extrémité latérale du secteur 20 associé et vient radialement en appui contre la coquille 16, 18 associée dans la position de fermeture du moule 10. Les moyens d'espacement 30 sont disposés les uns relativement aux autres de sorte à former deux anneaux ou joncs inférieur et supérieur interposés radialement entre les secteurs 20 et les coquilles 16, 18. Les moyens d'espacement 30 sont identiques entre eux.

Afin de limiter les transferts de chaleur par conduction entre les secteurs 20 et les coquilles 16, 18 dans la position de fermeture du moule, chaque moyen d'espacement 30 est réalisé dans un matériau isolant thermiquement qui présente une conductivité thermique inférieure à la conductivité thermique de chacun des matériaux des secteurs 20 et inférieure à la conductivité thermique du matériau des coquilles 16, 18. Avantageusement, les moyens d'espacement 30 sont réalisés en un matériau métallique tel que du titane, ou en un matériau composite. Les moyens d'espacement 30 remplissent une double fonction, à savoir maintenir un écartement dans le sens radial entre les secteurs 20 et les coquilles 16, 18 et limiter le transfert de chaleur par conduction entre ces éléments dans la position de fermeture du moule 10.

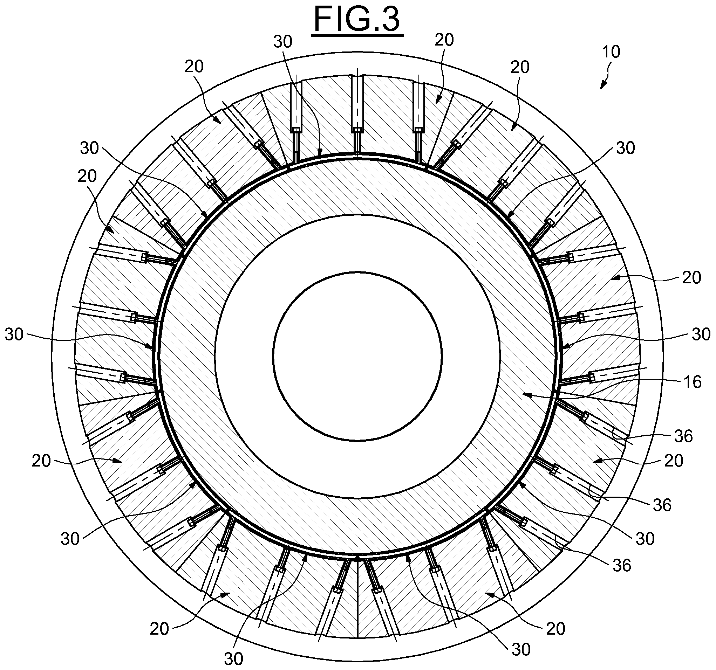

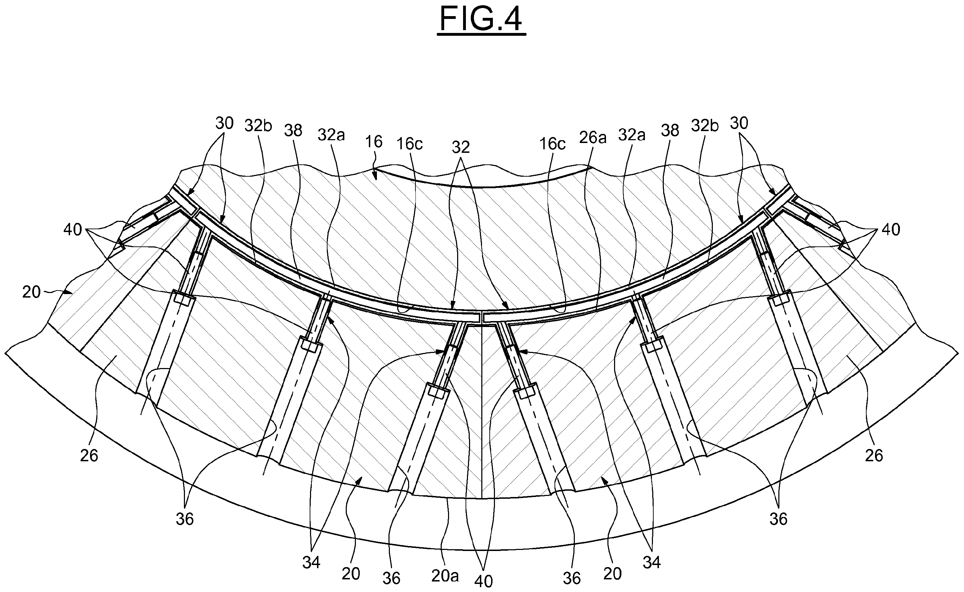

Chaque moyen d'espacement 30 comprend une partie d'espacement 32 interposée radialement entre le secteur 20 associé et la coquille 16 ou 18, et des parties de fixation 34 s'étendant radialement vers l'extérieur chacune à l'intérieur d'un trou 36 ménagé dans l'épaisseur dudit secteur. Chaque partie d'espacement 32 est de forme courbée ou cintrée et réalisée sous la forme d'un tronçon de jonc s'étendant circonférentiellement (figures 3 et 4). Dans la position de fermeture du moule 10, chaque partie d'espacement 32 est radialement en contact d'un côté contre le secteur 20 associé et radialement en contact de l'autre côté contre la coquille 16 ou 18.

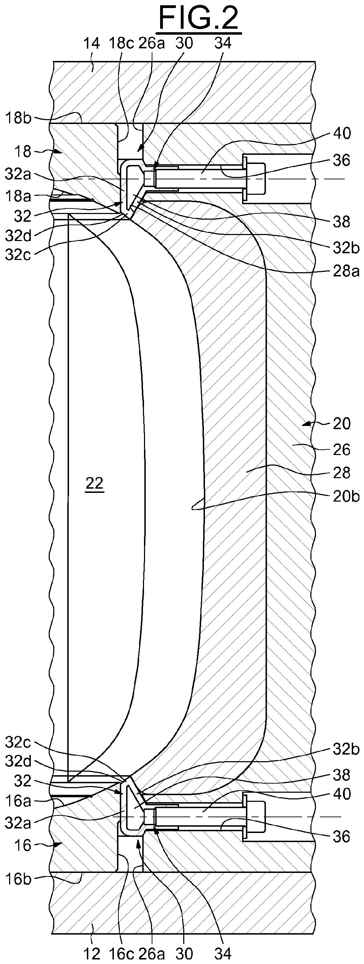

Comme illustré plus visiblement à la figure 2, chaque partie d'espacement 32 comprend une paroi intérieure 32a axiale venant radialement en contact avec une face d'extrémité 16c, ou 18c, extérieure axiale de la coquille associée dans la position de fermeture du moule. La face d'extrémité 16c, ou 18c, de la coquille délimite radialement du côté extérieur les faces interne et externe 16a et 16b, ou 18a et 18b.

Chaque partie d'espacement 32 comprend également une paroi extérieure 32b qui est opposée radialement à la paroi intérieure 32a et montée radialement en appui contre une face d'extrémité intérieure du secteur 20 associé. La face d'extrémité intérieure est radialement en regard de la face d'extrémité 16c, ou 18c, extérieure de chaque coquille en restant à distance de celle-ci. La paroi extérieure 32b est montée radialement en appui contre une face d'extrémité 26a intérieure axiale du support 26 et contre une face d'extrémité 28a intérieure tronconique de la garniture 28 de moulage. Lesdites faces d'extrémité 26a, 28a forment la face d'extrémité intérieure du secteur.

Chaque partie d'espacement 32 comprend encore une paroi interne 32c reliant les parois intérieure 32a et extérieure 32b, et délimitant une face de contact 32d prévue pour venir en appui contre le pneumatique dans la position de fermeture du moule 10. La face de contact 32d prolonge localement la face intérieure 20b du secteur associé et la face interne 16a, ou 18a, associée des coquilles.

Chaque partie d'espacement 32 délimite intérieurement une cavité 38 vide de forme courbée s'étendant sur toute la longueur de ladite partie. La cavité 38 est délimitée dans le sens radial par les parois intérieure 32a et extérieure 32b. La cavité 38 est formée dans l'épaisseur radiale de la partie d'espacement 32. La partie d'espacement 32 présente une forme générale creuse courbée.

Comme illustré plus visiblement aux figures 3 et 4, chaque partie d'espacement 32 est délimitée dans le sens circonférentiel par deux parois d'extrémité opposées (non référencées). Les parois d'extrémité délimitent la cavité 38 dans le sens circonférentiel. Dans la position de fermeture du moule 10, chaque paroi d'extrémité d'une partie d'espacement 32 est montée en appui contre une des parois d'extrémité de la partie d'espacement 32 immédiatement adjacente. Dans cette position, les moyens d'espacement 30 sont positionnés bout à bout dans le sens circonférentiel et les parties d'espacement 32 délimitent les joncs inférieur et supérieur interposés entre les secteurs 20 et les coquilles 16, 18. Dans la position de fermeture du moule 10, il existe un léger jeu circonférentiel entre deux supports 26 adjacents et les garnitures 28 viennent en appui les unes contre les autres dans le sens circonférentiel.

Chaque partie de fixation 34 s'étend à partir de la partie d'espacement 32 associée sensiblement radialement vers l'extérieur. Chaque partie de fixation 34 présente une forme tubulaire de section circulaire et débouche dans la cavité 38 de la partie d'espacement 32. Dans l'exemple de réalisation illustré, chaque moyen d'espacement 30 comprend trois parties de fixation 34. Une des parties de fixation 34 est située sensiblement au milieu de la partie d'espacement 32 et les deux autres parties de fixation 34 sont situées chacune au voisinage d'une des parois d'extrémité de ladite partie d'espacement. Chaque partie de fixation 34 est logée à l'intérieur d'un des trous 36 traversants prévus sur le secteur 20 associé. Chaque trou 36 s'étend sensiblement radialement à partir de la face extérieure 20a du secteur associé et débouche sur la face d'extrémité 26a intérieure du support. Les trous 36 de chaque secteur sont identiques.

Le moule 10 comprend encore une pluralité de vis 40 de fixation montée chacune à l'intérieur d'un des trous 36 des secteurs et à l'intérieur de la partie de fixation 34 associée du moyen d'espacement. Chaque partie de fixation 34 comprend intérieurement un filetage pour assurer l'immobilisation des moyens d'espacement 30 sur les secteurs 20 via les vis 40. Trois vis 40 sont prévues pour la fixation de chaque moyen d'espacement 30 sur le secteur 20 associé. Pour chaque secteur 20, les deux moyens d'espacement 30 assurent le maintien et la fixation de la garniture 28 de moulage sur le support 26 dudit secteur.

Dans la position de fermeture du moule 10, les secteurs 20 sont maintenus espacés des coquilles 16, 18 dans le sens radial par l'intermédiaire des moyens d'espacement 30. Les coquilles 16, 18 et les secteurs 20 sont en contact dans le sens radial uniquement par l'intermédiaire des moyens d'espacement 30. Dans cette position de moulage du pneumatique, aucun contact radial direct n'existe entre les coquilles 16, 18 et entre la garniture 28 de moulage et le support 26 de chaque secteur. Pour chaque secteur 20, chacun des deux moyens d'espacement 30 associés est interposé entre d'une part l'une des deux coquilles 16, 18 et d'autre part la garniture 28 de moulage et le support 26 dudit secteur.

La réalisation des moyens d'espacement 30 dans un matériau isolant thermiquement qui présente une conductivité thermique inférieure aux conductivités thermiques des matériaux des coquilles 16 et 18, de la garniture 28 de moulage et du support 26 permet de réduire les transferts thermiques par conduction existants entre les coquilles 16, 18 et les secteurs 20 du moule lors de la cuisson du pneumatique.

Lors de la cuisson, les deux coquilles 16, 18 du moule peuvent être chauffées à une température différente de celle à laquelle sont chauffés les secteurs 20. Dans la position de fermeture du moule 10, les moyens d'espacement 30 permettent de réduire les échanges de chaleur à l'intérieur du moule de sorte à maintenir sensiblement constant l'écart thermique prévu entre les coquilles 16, 18 et les secteurs 20. La cuisson du pneumatique est ainsi optimisée.

Dans cet exemple de réalisation, les moyens d'espacement 30 sont entièrement réalisés dans un matériau présentant une conductivité thermique inférieure à celles des matériaux des secteurs et des coquilles. Dans une variante de réalisation, il pourrait être envisageable de réaliser chaque moyen d'espacement en plusieurs matériaux, par exemple en un premier matériau isolant thermiquement tel que défini précédemment pour la partie d'espacement et en un second matériau pouvant être métallique pour les parties de fixation.

Dans l'exemple de réalisation décrit, les parties d'espacement 32 des moyens d'espacement 30 sont creuses de sorte à limiter encore les échanges de chaleur entre les coquilles 16, 18 et les secteurs 20 du moule par la présence d'air. En variante, il pourrait toutefois être possible de prévoir des parties d'espacement de section pleine.

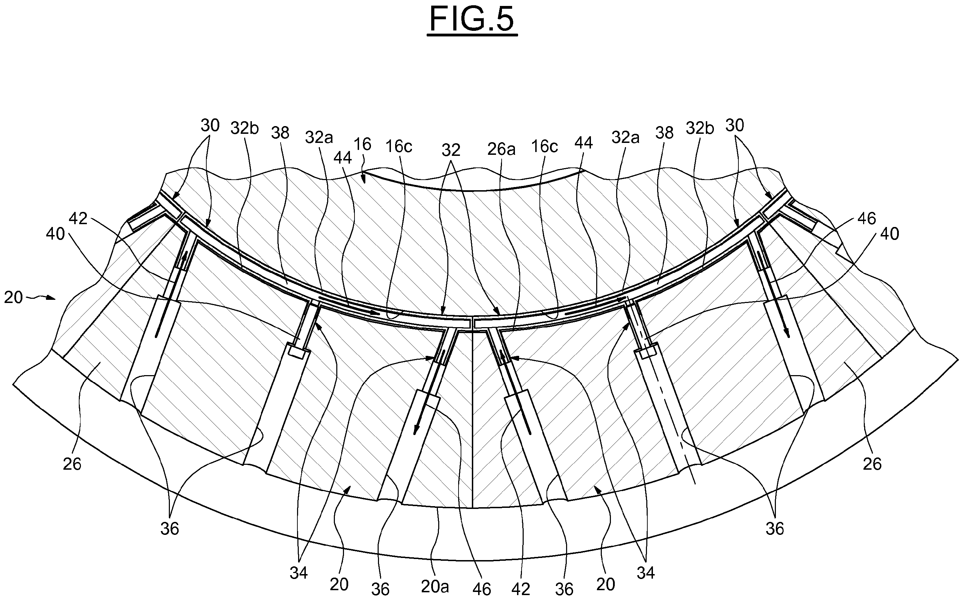

L'exemple de réalisation illustré à la figure 5, sur laquelle les éléments identiques portent les mêmes références, diffère en ce que chaque moyen d'espacement 30 est fixé sur le secteur 20 associé par l'intermédiaire d'une unique vis 40 de fixation. La vis 40 est située au milieu du moyen d'espacement 30 associé. Pour chaque moyen d'espacement 30, les deux parties de fixation 34 laissées libres sont raccordées à des conduits d'alimentation et de sortie (non représentés) du moule 10 pour obtenir la circulation d'un fluide de refroidissement à l'intérieur et le long de la cavité 38 dudit moyen d'espacement. Chacun des conduits d'alimentation et de sortie est monté à l'intérieur de la partie de fixation 34 associée du moyen d'espacement et du trou 36 correspondant du secteur 20. La circulation du fluide de refroidissement à l'intérieur de chaque secteur 20 et de chaque moyen d'espacement 30 associé est illustrée schématiquement par les flèches référencées 42 à 46.

Avec une circulation du fluide de refroidissement à l'intérieur de chaque moyen d'espacement 30, on limite les transferts thermiques pouvant se produire entre les coquilles 16, 18 et les secteurs 20 du moule lors de la cuisson du pneumatique. Dans cette variante de réalisation, chaque moyen d'espacement 30 peut être réalisé dans un matériau thermiquement conducteur, notamment en acier, en aluminium, etc. Afin de limiter encore les transferts thermiques entre les coquilles 16, 18 et les secteurs 20 du moule dans la position de fermeture, chaque moyen d'espacement 30 peut être réalisé dans un matériau thermiquement isolant tel que défini dans le premier exemple de réalisation.

Dans une variante de réalisation, il est possible de prévoir une communication fluidique entre les moyens d'espacement 30 de sorte à prévoir un unique conduit d'alimentation en fluide et un unique conduit de sortie montés sur le moule 10. Dans ce but, il pourrait être possible de monter ces deux conduits sur deux moyens d'espacement 30 successifs comprenant chacun une seule paroi d'extrémité montée en appui contre la paroi d'extrémité de l'autre moyen d'espacement, et de ne pas prévoir de parois d'extrémité pour les autres moyens d'espacement 30 de sorte à former une unique cavité circulaire commune à l'ensemble de ces moyens d'espacement.

Dans les exemples de réalisation décrits, les moyens d'espacement 30 sont fixés sur les secteurs 20 du moule. Cette disposition est avantageuse dans la mesure où cela permet d'assurer la fixation des garnitures 28 de moulage sur les supports 26 des secteurs par l'intermédiaire des moyens d'espacement 30. En variante, il pourrait toutefois être possible de prévoir une fixation des moyens d'espacement 30 sur les coquilles 16, 18 du moule.

La présente invention a été illustrée sur la base d'un moule comprenant un seul jeu de secteurs pour assurer le moulage de la bande de roulement du pneumatique. Il est également possible, sans sortir du cadre de l'invention, de prévoir un moule comprenant un jeu de secteurs inférieurs et un jeu de secteurs supérieurs pour assurer le moulage de la bande de roulement du pneumatique, et dans lequel le déplacement de chaque jeu de secteurs est commandé par une couronne de serrage spécifique.

## Revendications

1. Moule pour pneumatique du type comprenant une bande de roulement et deux flancs latéraux, le moule comprenant des première et deuxième coquilles (16, 18) destinées à assurer le moulage des flancs latéraux du pneumatique, et une pluralité de secteurs (20) répartis dans le sens circonférentiel et destinés à assurer le moulage de la bande de roulement dudit pneumatique, lesdits secteurs (20) étant mobiles radialement entre une position d'ouverture et une position de fermeture du moule, ledit moule comprenant en outre au moins un moyen d'espacement (30) interposé entre chaque secteur (20) et chaque coquille (16, 18) pour maintenir espacés dans le sens radial ledit secteur et les coquilles dans la position de fermeture du moule de sorte que les coquilles (16, 18) et les secteurs (20) sont en contact dans le sens radial uniquement par l'intermédiaire des moyens d'espacement (30), lesdits moyens d'espacement étant aptes à limiter le transfert thermique entre les coquilles et les secteurs dans ladite position de fermeture du moule.

2. Dispositif selon la revendication 1, dans lequel chaque moyen d'espacement (30) est réalisé au moins en partie en matériau isolant thermiquement présentant une conductivité thermique inférieure à celles des matériaux des secteurs et des coquilles.

3. Moule selon la revendication 1 ou 2, dans lequel chaque moyen d'espacement (30) comprend une partie d'espacement (32) réalisée sous la forme d'un tronçon de jonc, les moyens d'espacement étant disposés de sorte que les parties d'espacement (32) forment au moins un jonc entre les secteurs (20) et chaque coquille (16, 18).

4. Moule selon la revendication 3, dans lequel ladite partie d'espacement (32) délimite intérieurement au moins une cavité (38).

5. Moule selon la revendication 4, dans lequel ladite cavité (38) est délimitée dans le sens radial par des parois intérieure (32a) et extérieure (32b) de la partie d'espacement montées en contact contre la coquille (16, 18) associée et contre le secteur (20) associé.

6. Moule selon la revendication 4 ou 5, comprenant des moyens d'alimentation en fluide de refroidissement de ladite cavité (38) et des moyens de sortie dudit fluide pour obtenir une circulation du fluide de refroidissement le long de ladite cavité.

7. Moule selon l'une quelconque des revendications 3 à 6, dans lequel chaque moyen d'espacement (30) comprend au moins une partie de fixation (34) s'étendant sensiblement radialement à partir de la partie d'espacement (32) à l'intérieur d'un trou (36) ménagé sur le secteur associé ou sur la coquille associée.

8. Moule selon la revendication 7, comprenant un moyen de fixation (40) monté dans ledit trou et s'étendant à l'intérieur de ladite partie de fixation (34).

9. Moule selon l'une quelconque des revendications précédentes, dans lequel chaque moyen d'espacement (30) est radialement en contact d'un côté contre la coquille (16, 18) associée et radialement en contact de l'autre côté contre le secteur (20) associé.

10. Moule selon l'une quelconque des revendications précédentes, dans lequel chaque moyen d'espacement (30) comprend une face de contact (32d) avec le pneumatique dans la position de fermeture du moule.

11. Moule selon l'une quelconque des revendications précédentes, dans lequel chaque moyen d'espacement (30) est réalisé en un matériau métallique ou en un matériau composite.

12. Moule selon l'une quelconque des revendications précédentes, dans lequel chaque secteur (20) comprend un support (26) et une garniture (28) de moulage fixée sur ledit support.

13. Moule selon la revendication 12, dans lequel les moyens d'espacement (30) sont fixés sur les secteurs (20) et assurent la retenue des garnitures (28) de moulage sur les supports (26).

14. Moule selon l'une quelconque des revendications précédentes, comprenant au moins une couronne (24) de serrage coopérant avec des faces extérieures des secteurs (20).

15. Procédé de moulage d'un pneumatique à l'aide d'un moule selon l'une quelconque des revendications précédentes, dans lequel on chauffe les deux coquilles à une température différente de celle à laquelle sont chauffés les secteurs du moule.

## Patentansprüche

1. Form für einen Reifen des Typs, der einen Laufstreifen und zwei Seitenwände umfasst, wobei die Form eine erste und eine zweite Seitenschale (16, 18), die dazu bestimmt sind, das Formen der Seitenwände des Reifens sicherzustellen, und mehrere Sektoren (20), die in der Umfangsrichtung verteilt sind und dazu bestimmt sind, das Formen des Laufstreifens des Reifens sicherzustellen, umfasst, wobei die Sektoren (20) zwischen einer Öffnungsposition und einer Schließposition der Form radial beweglich sind, wobei die Form außerdem wenigstens ein Abstandsmittel (30) umfasst, das zwischen jedem Sektor (20) und jeder Seitenschale (16, 18) angeordnet ist, um den Sektor und die Seitenschalen in der Schließposition der Form in der radialen Richtung beabstandet zu halten, so dass sich die Seitenschalen (16, 18) und die Sektoren (20) in der radialen Richtung ausschließlich über die Abstandsmittel (30) in Kontakt befinden, wobei die Abstandsmittel geeignet sind, die Wärmeübertragung zwischen den Seitenschalen und den Sektoren in der Schließposition der Form zu begrenzen.

2. Vorrichtung nach Anspruch 1, wobei jedes Abstandsmittel (30) wenigstens teilweise aus thermisch isolierendem Material hergestellt ist, das eine spezifische Wärmeleitfähigkeit aufweist, die niedriger als diejenige der Materialien der Sektoren und der Seitenschalen ist.

3. Form nach Anspruch 1 oder 2, wobei jedes Abstandsmittel (30) einen Abstandsteil (32) umfasst, der in der Form eines Ringteilstücks hergestellt ist, wobei die Abstandsmittel derart angeordnet sind, dass die Abstandsteile (32) wenigstens einen Ring zwischen den Sektoren (20) und jeder Seitenschale (16, 18) bilden.

4. Form nach Anspruch 3, wobei der Abstandsteil (32) innen wenigstens einen Hohlraum (38) begrenzt.

5. Form nach Anspruch 4, wobei der Hohlraum (38) in der radialen Richtung durch eine Innenwand (32a) und eine Außenwand (32b) des Abstandsteils begrenzt wird, die so angebracht sind, dass sie sich in Kontakt mit der zugeordneten Seitenschale (16, 18) und mit dem zugeordneten Sektor (20) befinden.

6. Form nach Anspruch 4 oder 5, welche Mittel zur Speisung des Hohlraums (38) mit Kühlfluid und Mittel zum Austritt dieses Fluids umfasst, um eine Zirkulation des Kühlfluids entlang des Hohlraums zu erzielen.

7. Form nach einem der Ansprüche 3 bis 6, wobei jedes Abstandsmittel (30) wenigstens einen Befestigungsteil (34) umfasst, der sich von dem Abstandsteil (32) aus im Wesentlichen radial ins Innere eines Lochs (36) erstreckt, das auf dem zugeordneten Sektor oder auf der zugeordneten Seitenschale ausgebildet ist.

8. Form nach Anspruch 7, welche ein Befestigungsmittel (40) umfasst, das in dem Loch angebracht ist und sich ins Innere des Befestigungsteils (34) erstreckt.

9. Form nach einem der vorhergehenden Ansprüche, wobei sich jedes Abstandsmittel (30) auf einer Seite radial in Kontakt mit der zugeordneten Seitenschale (16, 18) und auf der anderen Seite radial in Kontakt mit dem zugeordneten Sektor (20) befindet.

10. Form nach einem der vorhergehenden Ansprüche, wobei jedes Abstandsmittel (30) eine Kontaktfläche (32d) mit dem Reifen in der Schließposition der Form umfasst.

11. Form nach einem der vorhergehenden Ansprüche, wobei jedes Abstandsmittel (30) aus einem metallischen Material oder aus einem Verbundmaterial hergestellt ist.

12. Form nach einem der vorhergehenden Ansprüche, wobei jeder Sektor (20) einen Träger (26) und einen Formeinsatz (28), der an dem Träger befestigt ist, umfasst.

13. Form nach Anspruch 12, wobei die Abstandsmittel (30) an den Sektoren (20) befestigt sind und das Halten der Formeinsätze (28) auf den Trägern (26) sicherstellen.

14. Form nach einem der vorhergehenden Ansprüche, welche wenigstens einen Klemmring (24) umfasst, der mit Außenflächen der Sektoren (20) zusammenwirkt.

15. Verfahren zum Formen eines Reifens mithilfe einer Form nach einem der vorhergehenden Ansprüche, wobei die zwei Seitenschalen auf eine Temperatur erwärmt werden, die von derjenigen verschieden ist, auf welche die Sektoren der Form erwärmt werden.

## Claims

1. Mould for a tyre of the type comprising a tread and two lateral sidewalls, the mould comprising first and second shells (16, 18) that are intended to mould the lateral sidewalls of the tyre, and a plurality of sectors (20) that are distributed in the circumferential direction and are intended to mould the tread of said tyre, said sectors (20) being radially movable between an open position and a closed position of the mould, said mould comprising at least one spacing means (30) interposed between each sector (20) and each shell (16, 18) in order to keep said sector and the shells spaced apart in the radial direction in the closed position of the mould, such that the shells (16, 18) and the sectors (20) are in contact in the radial direction only by way of the spacing means (30), said spacing means being able to limit the heat transfer between the shells and the sectors in said closed position of the mould.

2. Device according to Claim 1, wherein each spacing means (30) is made at least in part of thermally insulating material having a thermal conductivity lower than that of the materials of the sectors and of the shells.

3. Mould according to Claim 1 or 2, wherein each spacing means (30) comprises a spacing part (32) made in the form of a section of a ring, the spacing means being disposed such that the spacing parts (32) form at least one ring between the sectors (20) and each shell (16, 18).

4. Mould according to Claim 3, wherein said spacing part (32) internally delimits at least one cavity (38).

5. Mould according to Claim 4, wherein said cavity (38) is delimited in the radial direction by an inner wall (32a) and an outer wall (32b) of the spacing part, said walls being mounted in contact with the associated shell (16, 18) and with the associated sector (20).

6. Mould according to Claim 4 or 5, comprising means for supplying cooling fluid to said cavity (38) and means for the outlet of said fluid so as to obtain a flow of the cooling fluid along said cavity.

7. Mould according to any one of Claims 3 to 6, wherein each spacing means (30) comprises at least one fastening part (34) extending substantially radially from the spacing part (32) inside a hole (36) formed in the associated sector or in the associated shell.

8. Mould according to Claim 7, comprising a fastening means (40) that is mounted in said hole and extends inside said fastening part (34).

9. Mould according to any one of the preceding claims, wherein each spacing means (30) is radially in contact on one side with the associated shell (16, 18) and radially in contact on the other side with the associated sector (20).

10. Mould according to any one of the preceding claims, wherein each spacing means (30) comprises a contact face (32d) for contact with the tyre in the closed position of the mould.

11. Mould according to any one of the preceding claims, wherein each spacing means (30) is made of a metal material or of a composite material.

12. Mould according to any one of the preceding claims, wherein each sector (20) comprises a support (26) and a moulding lining (28) fastened to said support.

13. Mould according to Claim 12, wherein the spacing means (30) are fastened to the sectors (20) and retain the moulding linings (28) on the supports (26).

14. Mould according to any one of the preceding claims, comprising at least one clamping ring (24) that cooperates with outer faces of the sectors (20).

15. Method for moulding a tyre with the aid of a mould according to any one of the preceding claims, wherein the two shells are heated to a temperature different from that to which the sectors of the mould are heated.
